# EUROPÄISCHE PATENTSCHRIFT

(11) **EP 1 747 875 B1**
(45) Veröffentlichungstag und Bekanntmachung des Hinweises auf die Patenterteilung: **09.07.2008**
(21) Anmeldenummer: 06014975.4
(22) Anmeldetag: 19.07.2006
(51) Int. Cl.: B29C 51/44, B65G 57/30

(54) **Vorrichtung zum Stapeln von Teilen aus thermoplastischem Kunststoff**
Device for piling up of parts made of thermoplastic material
Appareil pour empile des pièces en matière thermoplastique

(30) Priorität: 28.07.2005 DE 102005035459
(43) Veröffentlichungstag der Anmeldung: 31.01.2007
(73) Patentinhaber: Mould and Matic Solutions, 4563 Micheldorf (AT)
(72) Erfinder: Seisenbacher, Andreas, 4531 Kematen (AT)
(74) Vertreter: Castell, Klaus

(56) Entgegenhaltungen:
- EP-A1- 1 221 365
- EP-A2- 1 052 080
- DE-A1- 19 710 475
- DE-A1- 19 716 655

## Beschreibung

Die Erfindung bezieht sich auf eine Vorrichtung zum Stapeln von aus einem kombinierten Mehrfachform- und Stanzwerkzeug ausgeschobenen Teilen aus thermoplastischem Kunststoff, umfassend eine Aufnahmeplatte mit der Anzahl der Formwerkzeuge entsprechenden Aufnahmen für die Übernahme der ausgeschobenen Teile sowie eine Stapelstation, wobei die Aufnahmeplatte zwischen dem Mehrfachformwerkzeug und der Stapelstation verfahrbar und um 180° schwenkbar ist.

Eine Vorrichtung dieser Art ist aus der EP 1 000 887 B 1 bekannt. Dort sind an beiden Seiten der Aufnahmeplatte Aufnahmen für die ausgeschobenen Teile vorgesehen. Die Aufnahmeplatte wird für den Stapelvorgang von einem Mehrfachformwerkzeug zur Stapelstation verschoben und dabei werden die auf der gegenüberliegenden Seite der Aufnahmeplatte aus dem vorhergehenden Maschinentakt aufgenommenen Teile zur Stapelstation verbracht, worauf die Aufnahmeplatte gewendet wird, so dass die freien Aufnahmen zur Aufnahme neuer Teile bereit sind. Die vorher aufgenommenen Teile durchlaufen also während des Wendevorganges einen weiteren Maschinentakt des Formwerkzeuges, um die aufgenommenen Teile einer längeren Kühlzeit zu unterwerfen. Dies erfordert eine Aufnahmeplatte mit doppelt so viel Aufnahmen wie Formnester in der Formmaschine vorhanden sind und außerdem einen umständlichen Verschiebevorgang mit eingeschlossenem Wendevorgang der Aufnahmeplatte, bei dem die aufgenommenen Teile erst bei dem zweiten Maschinentakt an die Stapelstation übergeben werden.

Aufgabe der Erfindung ist es, die Aufnahmeplatte mit den Aufnahmen zu vereinfachen und den Übergabevorgang von der Formstation zur Stapelstation zu vereinfachen und zu beschleunigen.

Diese Aufgabe wird bei einer Vorrichtung nach dem Oberbegriff des Anspruchs 1 erfindungsgemäß dadurch gelöst, dass die Aufnahmeplatte einen in entgegengesetzter Richtung zu den Aufnahmen abstehenden Halter aufweist, an dem an einem Mitnehmerpunkt mindestens ein Mitnehmer angreift, der mit einem Linearantrieb verbunden ist, dass der Halter mindestens einen Führungszapfen aufweist, der von der Aufnahmeplatte einen größeren Abstand als der Mitnehmerpunkt aufweist, dass mindestens eine Kulisse für den mindestens einen Führungszapfen vorgesehen ist, die zwischen dem Formwerkzeug und der Stapelstation angeordnet ist und dass die Kulisse zwei lineare Abschnitte und einen V-förmig verlaufenden Abschnitt zwischen den beiden linearen Abschnitt aufweist.

Durch diese Ausgestaltung ist es möglich, die aus dem Mehrfachformwerkzeug ausgeschobenen Teile aufzunehmen, mittels des Linearantriebes in Richtung auf die Stapelstation zu verschieben, wobei der Verschiebevorgang so erfolgt, dass die Aufnahmeplatte zunächst aufgrund des ersten linearen Abschnittes der Kulisse ihre Lage beibehält, dann beim Durchlaufen des Führungszapfens durch den V-förmigen Abschnitt der Kulisse gewendet wird, so dass dann im Verlauf des zweiten linearen Abschnittes die Aufnahmeplatte mit den aufgenommenen Teilen eine um 180° geschwenkte Lage einnimmt, in der die aufgenommenen Teile an die Stapelstation übergeben werden können. Die Aufnahmeplatte weist also nur an einer Seite Aufnahmen auf und die aufgenommenen Teile werden während des Verschiebevorganges zwischen dem Mehrfachformwerkzeug und der Stapelstation während eines Maschinentaktes an die Stapelstation übergeben, worauf innerhalb dieses Maschinentaktes die Aufnahmeplatte wieder in die Ausgangsstellung zurückgeführt wird, um die neu geformten Teile wieder aufnehmen zu können. Gegenüber dem Stande der Technik ist also eine Verringerung des Aufwandes bei der Aufnahmeplatte und eine Verkürzung des Stapelvorganges ermöglicht, denn die Aufnahmeplatte ist aufgrund dieser Kulissensteuerung in der Lage, während eines Maschinentaktes des Mehrfachformwerkzeuges die Teile aufzunehmen, an die Stapelstation überzugeben und wieder an den Ausgangspunkt zurückzukehren, um die Teile des zweiten Maschinentaktes aufnehmen zu können.

Wenn in weiterer Ausgestaltung der Erfindung die Aufnahmeplatte ein Schwenklager aufweist, dessen Achse mit dem Mitnehmerpunkt zusammenfällt, so wird hierdurch nicht nur der konstruktive Aufwand verringert, sondern die Bewegung der Aufnahmeplatte auf ein Minimum beschränkt, was sich für die Erzielung einer hohen Taktzahl vorteilhaft auswirkt.

Grundsätzlich ist zwar nach Anspruch 1 von einer einseitigen Anordnung eines Mitnehmers sowie einer Kulisse ausgegangen worden, jedoch dient eine weitere Ausgestaltung der Erfindung einer sicheren Halterung und Führung der Aufnahmeplatte, wobei diese Ausgestaltung darin besteht, dass an beiden Enden des Halters jeweils ein Mitnehmer und ein Linearantrieb sowie jeweils ein Führungszapfen und eine Kulisse vorgesehen sind. Hierdurch sind also an beiden Enden des Halters für die Aufnahmeplatte jeweils ein Mitnehmer, ein Linearantrieb, ein Führungszapfen und eine Kulisse vorgesehen, so dass die Aufnahmeplatte durch zwei Antriebs- und Führungsanordnungen sicher geführt ist, was bei hohen Bewegungsgeschwindigkeiten gegenüber einer einseitigen Lagerung und Führung vorteilhaft ist.

In der Praxis werden das Mehrfachformwerkzeug und die Stapelstation im wesentlichen in gleicher Höhe angeordnet oder es besteht ein gewisser Höhenunterschied, der eine geringfügige Neigung des Linearantriebes erfordert. Zur Erzielung der Schwenkbewegung der Aufnahmeplatte kann selbstverständlich der V-förmig verlaufende Abschnitt der Kulisse nach oben oder unten ausgerichtet sein. In vorteilhafter Weiterbildung der Erfindung ist der V-förmig verlaufende Abschnitt der Kulisse ausgehend von den linearen Abschnitten nach unten ausgerichtet. Hierdurch ist die theoretisch mögliche Gefahr des Verlustes von gefertigten Teilen von den Aufnahmen mit Sicherheit vermieden.

Um einen möglichst kurzen Weg zwischen dem Mehrformwerkzeug und der Stapelstation und damit eine hohe Taktzahl insbesondere bei der Herstellung von Bechern zu erreichen, ist in Weiterbildung der Erfindung vorgesehen, dass von den beiden linearen Abschnitte der Kulisse der zur Stapelstation ausgerichteten Abschnitt länger ist. Hierdurch wird der kürzeste Weg zwischen Formwerkzeug und Stapelstation ermöglicht, da die Kulisse gerade nur so lange ausgeführt ist, dass ein Verschwenken der Aufnahmeplatte um 180° durchgeführt werden kann. Der zum Formwerkzeug ausgerichtete Abschnitt kann kürzer sein, weil zum Aufnehmen eines Bechers ein kleinerer Verschiebeweg in der Kulisse notwendig ist als zum Einschieben eines Bechers über seinen Rand hinaus in die Stapelstation.

Eine weitere vorteilhafte Ausgestaltung nach der Erfindung sieht vor, dass außerhalb des V-förmigen Abschnittes der Kulisse symmetrisch zu diesem Abschnitt eine Stabilisierungskulisse vorgesehen ist, in die ein am Halter angeordneter Stabilisierungsstift mit Rolle während des Wendevorganges der Aufnahmeplatte eingreift. Hierdurch soll erreicht werden, dass bei der Führung der Aufnahmeplatte entlang der Kulisse ein unkontrolliertes Zurückschwenken beim Überschreiten des Wendepunktes des V-förmigen Abschnittes ausgeschlossen wird.

Um auch hinsichtlich der Stabilisierungskulisse eine möglichst einfache technische Lösung zu finden und einen sicheren Betriebsablauf zu gewährleisten ist vorgesehen, dass die Stabilisierungskulisse als ein auf der Symmetrielinie des V-förmigen Kulissenabschnittes liegender Führungsschlitz ausgebildet ist, in den der Stabilisierungsstift während der Führung des Führungszapfens an dem V-förmigen Abschnitt der Kulisse kurz vor, während und kurz nach dem Wendepunkt eingreift. Hierdurch ist sichergestellt, dass in unmittelbarer Nähe des Wendepunktes des V-förmigen Abschnittes der Kulisse die Schwenkbewegung in der gewünschten Drehrichtung stattfindet. Die Rolle ermöglicht eine reibungsarme Führung des Stabilisierungsstiftes in der Stabilisierungskulisse.

Um einerseits den Linearantrieb möglichst einfach zu gestalten und dabei auch noch eine möglichst hohe Taktzahl bei der Bewegung der Aufnahmeplatte zu erreichen, ist in erfindungsgemäßer Ausgestaltung vorgesehen, dass die Aufnahmeplatte und der Halter sowie die damit verbundenen und am Schwenkvorgang teilnehmenden Teile in Leichtbauweise gefertigt sind.

Die Erfindung wird nachfolgend anhand eines Ausführungsbeispiels näher erläutert. In der Zeichnung zeigen:

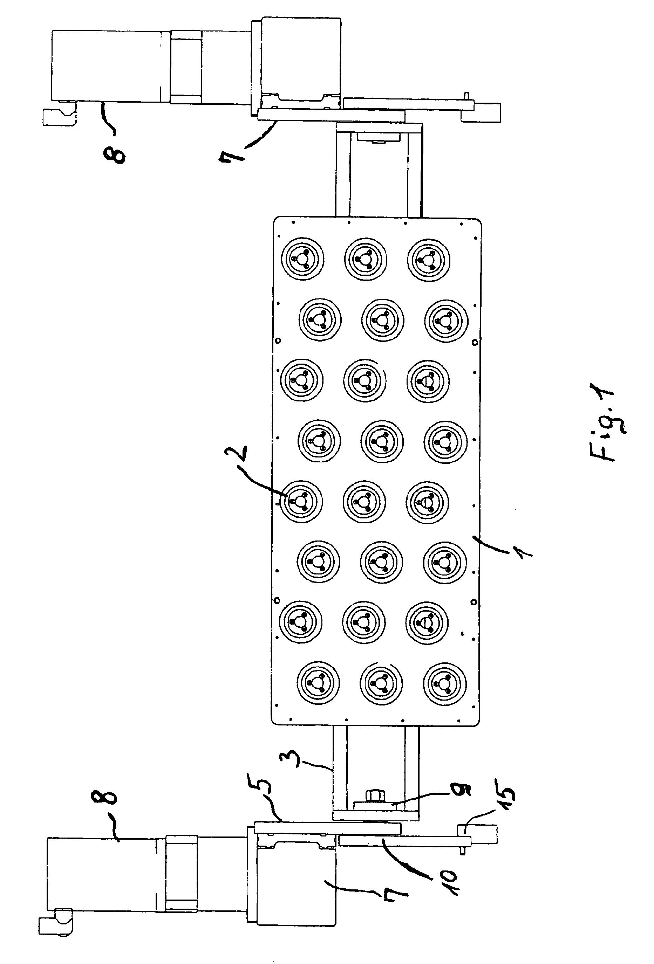

Fig. 1 eine Vorderansicht der Vorrichtung zum Stapeln von Kunststoffteilen;
Fig. 2 eine Ansicht von oben auf die Vorrichtung gemäß Figur 1; und
Fig. 3 einen Schnitt nach der Linie III-III in Figur 2.

Die zeichnerische Darstellung beschränkt sich nur auf die Vorrichtung zum Stapeln von aus Kunststoff bestehenden Teilen, das heißt auf die Vorrichtung, die zwischen einem kombinierten Mehrfachform- und Stanzwerkzeug einerseits und einer Stapelstation zur Aufnahme der Teile andererseits vorgesehen ist.

Wie aus der Zeichnung ersichtlich, umfasst diese Vorrichtung eine Aufnahmeplatte 1 mit einer Vielzahl von Aufnahmen 2, welche die aus dem Formwerkzeug ausgeschobenen Teile aufnehmen. In dem dargestellten Ausführungsbeispiel sind 24 solcher Aufnahmen vorgesehen, die bei einem Arbeitstakt die aus dem Mehrfach-Formwerkzeug ausgeschobenen 24 Teile aufnehmen können An der diesen Aufnahmen entgegengesetzten Seite ist die Aufnahmeplatte von einem Halter 3 getragen, der über gelochte Streben 4 an der Aufnahmeplatte angreift. Zu beiden Seiten des Halters 3 sind Mitnehmer 5 an Mitnehmerpunkten 6 festgelegt, die in jeweils einen Linearantrieb 7 eingreifen und dort an nicht dargestellten Zahnriemen oder Ketten festgelegt sind, die von Antriebsmotoren 8 angetrieben werden, um die Mitnehmer und damit die Aufnahmeplatte 1 zwischen dem nicht dargestellten Mehrfach-Formwerkzeug und der ebenfalls nicht dargestellten Stapelstation bewegen zu können. Der Mitnehmerpunkt 6 ist gleichzeitig Schwenklager für die Aufnahmeplatte 1, die auf dem Weg von dem Mehrfachformwerkzeug zur Stapelstation um 180° geschwenkt wird, um die aufgenommenen Teile, beispielsweise Becher, in die Stapelstation übergeben zu können. Das Schwenklager ist mit 9 bezeichnet.

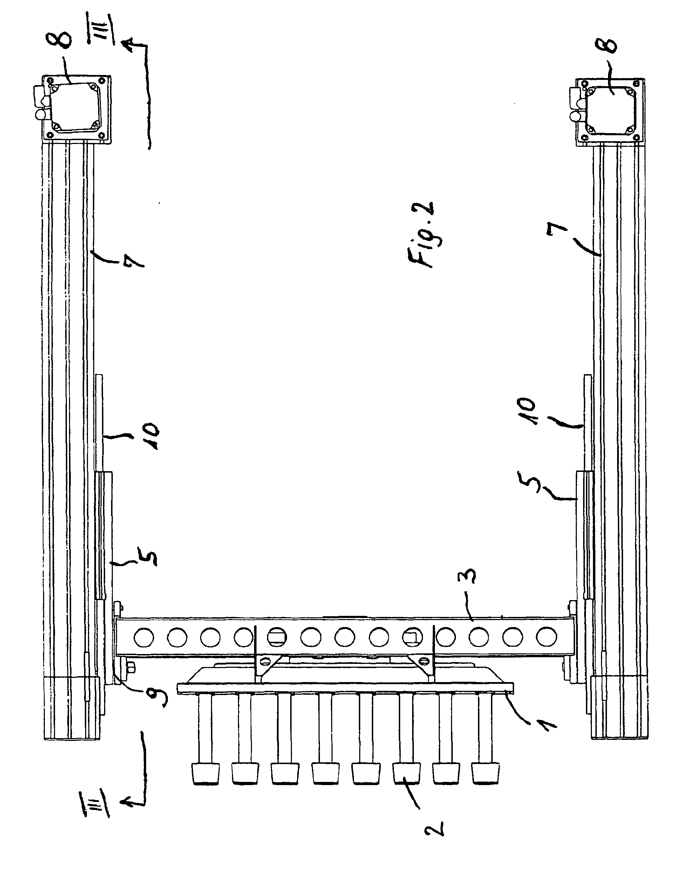

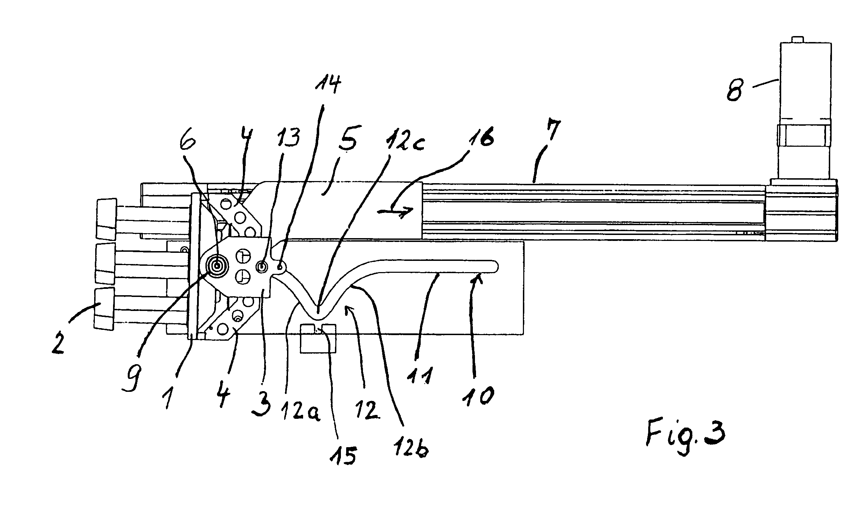

Damit die Aufnahmeplatte 1 von der einen Einstellung, in der sie in den Figuren 2 und 3 dargestellt ist, in die um 180° geschwenkte Stellung überführt werden kann, ist eine Kulisse 10 vorgesehen, die zwei lineare Abschnitte 11 und einen V-förmigen Abschnitt 12 umfasst, der einen absteigenden Teil 12a, einen aufsteigenden Teil 12b und einen Wendepunkt 12c umfasst. In diese Kulisse 10 greift ein am Halter 3 angeordneter Führungszapfen 13 ein, der von der Aufnahmeplatte 1 einen größeren Abstand aufweist, als der Mitnehmerpunkt 6. Solange sich der Führungszapfen 13 in dem in Figur 3 verdekkten linearen Abschnitt 11 der Kulisse 10 bewegt, solange haben die Aufnahmen 2 die Position, wie sie in Figur 3 dargestellt ist. Wenn der Führungszapfen 13 in den V-förmigen Abschnitt 12a eingreift, wird die Aufnahmeplatte 1 gekippt, bis sie beim Eintreffen des Führungszapfens 13 im Wendepunkt 12c horizontal liegt und die Aufnahmen 2 vertikal nach oben stehen. Wird dann bei der weiteren Linearverschiebung des Halters 5 dieser durch den Linearantrieb 7 verschoben, so bewegt sich der Führungszapfen 13 in dem Abschnitt 12b des V-förmigen Kulissenabschnittes 12, wodurch die Aufnahmeplatte 1 weiter geschwenkt wird, bis die Aufnahmeplatte 1 gegenüber der in Figur 3 dargestellten Lage um 180° geschwenkt ist, so dass die Aufnahmen 2 in eine der Figur 3 entgegengesetzte Richtung ausgerichtet sind und somit in die Stapelstation eingefahren werden können.

Damit im Wendepunkt 12c die Aufnahmeplatte 1 nicht unkontrolliert wieder zurückschwenkt, ist am Halter 3 ein Stabilisierungsstift 14 mit Rolle vorgesehen, der in eine Stabilisierungskulisse 15 eingreift, wenn sich der Führungszapfen 13 im Wendepunkt 12c des V-förmigen Abschnittes 12 der Kulisse 10 befindet. Dieser Stabilisierungsstift greift dabei schon in die Stabilisierungskulisse 15 ein, wenn sich der Führungszapfen 14 kurz vor dem Wendepunkt 12c befindet und verlässt diese Stabilisierungskulisse, wenn der Führungszapfen 13 den Wendepunkt in Richtung des zweiten Abschnittes 12b des V-förmigen Abschnittes 12 verlässt. Auf diese Weise wird sichergestellt, dass die Aufnahmeplatte 1 bei der Bewegung des Nehmers 5 in Richtung des Pfeils 16 auch in die richtige Richtung geschwenkt wird, so dass die Aufnahmen 2 in Richtung auf die nicht dargestellte Stapelstation ausgerichtet werden, wenn der Führungszapfen sich im aufsteigenden Bereich 12b des V-förmigen Abschnittes der Kulisse 10 bewegt und dann in den horizontalen Abschnitt 11 übergeht. Bei der Bewegung des Mitnehmers 5 in die dem Pfeil 16 entgegengesetzte Richtung, das heißt bei der Bewegung der Aufnahmeplatte 1 von der nicht dargestellten Stapelstation zurück zum Mehrfach-Formwerkzeug, wird die Aufnahmeplatte 1 nach Durchlaufen des Führungszapfens 13 durch den V-förmigen Abschnitt 12 wieder in die in Figur 3 dargestellte Lage um 180° zurückgeschwenkt, so dass die Aufnahmen 2 beim nächsten Maschinentakt des Mehrfach-Formwerkzeuges die ausgeschobenen Teile aufnehmen können.

Während der Verschwenkung der Aufnahmeplatte 1 um 180° wird diese durch das Lager 9 gehalten, das zwischen dem Halter 3 und dem Mitnehmer 5 im Mitnehmerpunkt 6 angeordnet ist und so bei der Linearbewegung des Mitnehmers 5 in dem Linearantrieb 7 die Schwenkbewegung des Halters 3 und damit der Aufnahmeplatte 1 ermöglicht.

## Patentansprüche

1. Vorrichtung zum Stapeln von aus einem kombinierten Mehrfachform- und Stanzwerkzeug ausgeschobenen Teilen aus thermoplastischem Kunststoff, umfassend eine Aufnahmeplatte (1) mit der Anzahl der Formwerkzeuge entsprechenden Aufnahmen (2) für die Übernahme der ausgeschobenen Teile sowie eine Stapelstation, wobei die Aufnahmeplatte (1) zwischen dem Mehrfachformwerkzeug und der Stapelstation verfahrbar und um 180° schwenkbar ist, **dadurch gekennzeichnet, dass** die Aufnahmeplatte (1) mindestens einen in entgegengesetzter Richtung zu den Aufnahmen abstehenden Halter (3) aufweist, an dem an einem Mitnehmerpunkt (6) mindestens ein Mitnehmer (5) angreift, der mit einem Linearantrieb (7) verbunden ist, dass der Halter (3) mindestens einen Führungszapfen (13) aufweist, der von der Aufnahmeplatte (1) einen größeren Abstand als der Mitnehmerpunkt (6) aufweist, dass eine Kulisse (10) für den mindestens einen Führungszapfen (13) vorgesehen ist, die zwischen dem Formwerkzeug und der Stapelstation angeordnet ist und dass die Kulisse (10) zwei lineare Abschnitte (11) und einen V-förmig verlaufenden Abschnitt (12) zwischen den beiden linearen Abschnitten aufweist.

2. Vorrichtung nach Anspruch 1, **dadurch gekennzeichnet, dass** die Aufnahmeplatte (1) ein Schwenklager (9) aufweist, dessen Achse mit dem Mitnehmerpunkt (6) zusammenfällt.

3. Vorrichtung nach Anspruch 1 oder 2, **dadurch gekennzeichnet, dass** an beiden Enden des Halters (3) jeweils ein Mitnehmer (5) und ein Linearantrieb (7) sowie jeweils ein Führungszapfen (13) und eine Kulisse (10) vorgesehen sind.

4. Vorrichtung nach einem der Ansprüche 1 bis 3, **dadurch gekennzeichnet, dass** der V-förmig verlaufende Abschnitt (12) der Kulisse (10) ausgehend von den linearen Abschnitten (11) nach unten ausgerichtet ist.

5. Vorrichtung nach einem der Ansprüche 1 bis 4, **dadurch gekennzeichnet, dass** von den beiden linearen Abschnitten (11) der Kulisse (10) der zur Stapelstation ausgerichtete Abschnitt länger ist.

6. Vorrichtung nach einem der Ansprüche 1 bis 5, **dadurch gekennzeichnet, dass** außerhalb des V-förmigen Abschnittes (12) der Kulisse (10) symmetrisch zu diesem Abschnitt eine Stabilisierungskulisse (15) vorgesehen ist, in die ein am Halter (3) angeordneter Stabilisierungsstift (14) mit Rolle während des Wendevorganges der Aufnahmeplatte (1) eingreift.

7. Vorrichtung nach einem der Anspruch 6, **dadurch gekennzeichnet, dass** die Stabilisierungskulisse (15) als ein auf der Symmetrielinie des V-förmigen Kulissenabschnittes (12) liegender Führungsschlitz ausgebildet ist, in den der Stabilisierungsstift (14) während der Führung des Führungszapfens (13) an den V-förmigen Abschnitten (12) der Kulisse (10) kurz vor, während, und kurz nach dem Wendepunkt (12c) eingreift.

8. Vorrichtung nach einem der Ansprüche bis 7, **dadurch gekennzeichnet, dass** die Aufnahmeplatte (1) und der Halter (3) sowie die damit verbundenen und am Schwenkvorgang teilnehmenden Teile in Leichtbauweise gefertigt sind.

## Claims

1. An apparatus for stacking parts pushed out of a combined multiple forming and stamping tool made from thermoplastic material, comprising a receiving plate (1) with receiving bights (2) corresponding to the number of forming tools for taking over the pushed out parts as well as a stacking station, said receiving plate (1) being adapted for travelling between said multiple forming tool and said stacking station and being pivotal 180°, **characterized in that** said receiving plate (1) comprises at least one holder (3) protruding in the direction opposite the receiving bights, at least one driver (5) acting onto said holder at a driver point (6), said driver being connected to a linear drive (7), that said holder (3) comprises at least one guide pin (13) that is spaced a greater distance from the receiving plate (1) than the driver point (6), that a crank (10) interposed between the forming tool and the stacking station is provided for the at least one guide pin (13), and that said crank (10) comprises two linear portions (11) and one portion (12) that extends in a V-shaped orientation between said two linear portions.

2. The apparatus as set forth in claim 1, **characterized in that** the receiving plate (1) comprises a pivot bearing (9) the axis of which coincides with the driver point (6).

3. The apparatus as set forth in claim 1 or 2, **characterized in that** a driver (5) and a linear drive (7) as well as a guide pin (13) and a crank (10) are respectively provided on either end of the holder (3).

4. The apparatus as set forth in any one of the claims 1 through 3, **characterized in that** the V-shaped portion (12) of the crank (10) is oriented downward, starting from the linear portions (11).

5. The apparatus as set forth in any one of the claims 1 through 4, **characterized in that**, among the two linear portions (11) of the crank (10), the one oriented toward the stacking station is longer.

6. The apparatus as set forth in any one of the claims 1 through 5, **characterized in that**, outside of the V-shaped portion (12) of the crank (10), symmetrical about this portion, there is provided a stabilizing crank (15) into which engages a stabilizing pin (14) with roll disposed on the holder (3) while the receiving plate (1) is reversing.

7. The apparatus as set forth in claim 6, **characterized in that** the stabilizing crank (15) is configured to be a guiding slot lying on the line of symmetry of the V-shaped crank portion (12) into which engages the stabilizing pin (14) while the guide pin (13) is being guided to the V-shaped portion (12) of the crank (10) shortly before, during, and shortly after the reversal point (12c).

8. The apparatus as set forth in any one of the claims 1 through 7, **characterized in that** the receiving plate (1) and the holder (3) as well as the parts associated thereto and participating in the pivoting movement are built in a lightweight mode of construction.

## Revendications

1. Dispositif pour empiler des pièces réalisées en matière thermoplastique et éjectées d'un outil de mise en forme multiple et d'estampage combiné, comprenant une plaque de réception (1) avec des logements (2) correspondant au nombre d'outils de mise en forme et destinés à accueillir les pièces éjectées ainsi qu'un poste d'empilage, la plaque de réception (1) étant mobile en déplacement entre l'outil de mise en forme multiple et le poste d'empilage et apte à pivoter de 180°, **caractérisé par le fait que** la plaque de réception (1) comporte au moins un support (3) faisant saillie dans la direction opposée aux logements, au moins un entraîneur (5) agissant sur ce support à un point d'entraînement (6), cet entraîneur étant relié à un entraînement linéaire (7), que le support (3) comporte au moins un téton de guidage (13) qui est plus distant de la plaque de réception (1) que le point d'entraînement (6), qu'une coulisse (10) interposée entre l'outil de mise en forme et le poste d'empilage est prévue pour l'au moins un téton de guidage (13) et que la coulisse (10) comporte deux portions linéaires (11) et une portion en V (12) entre les deux portions linéaires.

2. Dispositif selon la revendication 1, **caractérisé par le fait que** la plaque de réception (1) comporte un palier pivotant (9) dont l'axe coïncide avec le point d'entraînement (6).

3. Dispositif selon la revendication 1 ou 2, **caractérisé par le fait qu'**un entraîneur (5) et un entraînement linéaire (7) ainsi qu'un téton de guidage (13) et une coulisse (10) sont respectivement prévus aux deux extrémités du support (3).

4. Dispositif selon l'une quelconque des revendications 1 à 3, **caractérisé par le fait que** la portion en V (12) de la coulisse (10) est orientée vers le bas, à partir des portions linéaires (11).

5. Dispositif selon l'une quelconque des revendications 1 à 4, **caractérisé par le fait que** des deux portions linéaires (11) de la coulisse (10), la portion orientée vers le poste d'empilage est la plus longue.

6. Dispositif selon l'une quelconque des revendications 1 à 5, **caractérisé par le fait qu'**une coulisse de stabilisation (15) est prévue hors de la portion en V (12) de la coulisse (10), symétrique par rapport à cette portion, dans laquelle s'engage un téton de stabilisation (14) avec galet disposé sur le support (3) pendant le processus de retournement de la plaque de réception (1).

7. Dispositif selon la revendication 6, **caractérisé par le fait que** la coulisse de stabilisation (15) est conformée en forme de fente de guidage située sur la ligne de symétrie de la portion de coulisse en V (12), le téton de stabilisation (14) s'engageant dans celle-ci pendant le guidage du téton de guidage (13) vers la portion en V (12) de la coulisse (10) peu avant, pendant et peu après le point de retournement (12c).

8. Dispositif selon l'une quelconque des revendications 1 à 7, **caractérisé par le fait que** la plaque de réception (1) et le support (3) ainsi que les pièces associées et participant au pivotement sont de construction légère.
